# EUROPEAN PATENT SPECIFICATION

(11) **EP 1 216 146 B1**
(45) Date of publication and mention of the grant of the patent: **19.10.2005**
(21) Application number: 00954602.9
(22) Date of filing: 08.08.2000
(51) Int. Cl.: B32B 7/02, C08J 5/18, C08J 7/00, B65D 65/40

(54) **FILMABLE MATERIAL WITH CHARACTERISTICS SELECTIVELY MODIFIABLE BY ADMINISTRATION OF PARTICULAR TYPES OF ENERGY**
SELEKTIV VERÄNDERBARES FOLIENMATERIAL MITTELS ANWENDUNG VON VERSCHIEDENEN ENERGIETYPEN
MATIERE POUVANT ETRE TRANSFORMEE EN FILM ET PRESENTANT DES CARACTERISTIQUES SELECTIVEMENT MODIFIABLES PAR ADMINISTRATION DE TYPES PARTICULIERS D'ENERGIE

(30) Priority: 10.08.1999 IT VE990035
(43) Date of publication of application: 26.06.2002
(73) Proprietor: GRUPPO X DI X GRUPPO S.R.L., 30124 Venezia (IT); Alcan Packaging Italia S.r.l., 36030 Lugo di Vicenza (IT)
(72) Inventor: TRANI, Giorgio, I-30100 Venezia (IT); STERNER, Marion, I-30123 Venezia (IT)
(74) Representative: Piovesana, Paolo
(86) International application number: PCT/EP2000/007671
(87) International publication number: WO 2001/010635

(56) References cited:
- WO-A-00/69747
- WO-A-98/47766

## Description

This invention relates to a filmable material with characteristics selectively modifiable by administration of particular types of energy.

Such a material has a wide range of potential applications, and in particular can be produced in an undifferentiated form which, when required to satisfy a particular requirement, is transformed into the chosen differentiated form by administration of a suitable type of energy able to effect that, and only that, transformation.

WO-A-0069747 discloses a flexible wrap, particularly for packaging, consisting of one film provided partly with a substance irreversibly expandable by administering energy.

The filmable material of the invention is characterised by comprising at least one matrix with which there are associated a plurality of different substances which can be selectively activated by administering energies of different types and/or levels, to selectively modify the chemical physical structural and mechanical-optical characteristics of the material and/or of the product obtained from it.

The filmable material can be used to obtain flexible films, thread or tubes by means of a traditional extrusion process, or can be applied by spray or brush to the surface of any object to form a total or partial covering film.

The general principles and some particular embodiments of the invention are described in detail hereinafter by way of non-limiting example.

As stated, the filmable material of the invention consists generally of a single-layer or multi-layer polymer matrix containing substances in its interior which are able to give the film, thread or tube obtained from said material particular characteristics and properties following activation of said substances with energies of different types and/or levels.

The term "matrix" means a system formed from at least one filmable substance, with which the film property modifying substances are associated. In a first case the matrix is formed of a single filmable substance, in which modifying substances are dispersed, and when said substance is in film form, the matrix constitutes a layer with which the modifying substances are associated. In a second case the matrix consists of a system of several substances, with each of which at least one modifying substance is associated, and when said system is in film form, the matrix constitutes several layers joined together (multi-layer), with each of which at least one modifying substance is associated.

The filmable material can be organic, inorganic, organic-inorganic, synthetic or artificial, transparent of opaque or translucent, with visible and/or infrared and/or ultraviolet light transmission variable on command; impermeable or permeable to liquids or vapours or gases of selected type, including odour or perfume carrying substances; with mechanical and physical characteristics linked to the differentiated behaviour of individual layers, to obtain predetermined intrinsic thickness or shape rigidity, acoustic and thermal insulation with such characteristics as to screen against electromagnetic waves of various wavelengths, electrical and/or magnetic field powers of high or low impedance, with high dielectric characteristics such as to prevent electrical discharges within single-layer or multi-layer capacitors, but with optical, physical, mechanical, electromagnetic and permeability characteristics each also obtainable on command triggered by differential energy interventions, or thermodynamically or electromagnetically (UV, IR, light, X, cosmic radiation) or mechanically (vibration or ultrasound or explosion) or nuclearly by particles (ions, protons, plasma, eiectrons, alpha) or other energy form, each corresponding in quantity and quality to the obtaining of the desired characteristics.

The film, thread or tube obtained with the filmable material of the invention is generally in undifferentiated form, ie with a plurality of characteristics in the latent state. When certain characteristics are required to be manifested, or if certain already manifested characteristics are required to be transformed into other different characteristics, the film, thread or tube is fed with that particular energy which is able to interact with the substance responsible for the required transformation, and hence effect this transformation.

The polymer matrix of the material according to the invention can consist of a polyester resin, polyethylene, polypropylene, polyvinylchloride etc., those substances which provide or modify the film characteristics by energy administration being dispersed in the polymer matrix, or being retained by fibres possibly introduced into the matrix, or being enclosed in microcapsules. The various modifying substances must not be able, either before or after transformation, to interfere with each other or with the matrix which contains them, at least at their interface, in order not to cause undesirable mutual reactions between them.

Instead of introducing the modifying substances into the fluid mass from which the film is obtained by extrusion or by coextrusion or by spreading, said substance, especially if contained in microcapsules, can be applied to the film already prepared, by using a process of coextrusion or controlled application to the film or between two films.

If the single or multi-layer film is prepared by extrusion, the film after preparation can be wound in a reel for its preservation or diverse processing, possibly in a different place from its place of production, and using conventional packaging machines. In the case of tube instead of film, this can be wound in a reel, whereas in the case of thread this can be wound on a bobbin.

At the moment of its use, or when required to achieve a potentially available characteristic in the film, it needs merely to be fed with the scheduled quantity of energy of a type such as to cause the necessary substance to react and trigger the file modification process so that it manifests that characteristic.

To activate a further characteristic of the flexible film, energy of the type required for this further transformation is administered, to hence obtain a film with more than one manifested characteristic.

In the case of successive transformations, these should be of irreversible type, in order to prevent an energy administration from degrading or interfering not only with other unmodified substances but also with substances which following previous energy administration or other type have already been modified. If the substance modifying the film characteristic and its possible crosslinking initiator involve the entire surface of the web, localized activation of this substance can occur only if the energy is administered via suitable masking elements, which limit the administration to those regions effectively concerned.

If however the particular nature of the energy does not allow localized administration or if the triggered reaction is self-sustainable and self-propagates, the modifying substance must be applied to a controlled extent.

The flexible material of the invention can be used advantageously in various sectors of industry.

If the polymer matrix is extruded to obtain a film, this can be used for example in traditional packaging machines able to form packages which, based on particular requirements, can be subjected to different types of energy in order to modify the package in the required manner. This means for example that a store can hold reels of a single type of flexible film to be used to form packages which can then be differentiated from each other in the desired manner according to requirements. Thus, in particular, if the packaging machine produces bottles, these, even though obtained from the same material, can be soft or rigid, have thin walls or swollen (insulating) walls of different colours with or without barriers, by simply administering energy of different characteristics to the bottle, during its manufacture and/or filling.

If however the polymer matrix is used to produce a thread, this can be made into fabrics or knitted articles for civil or industrial use. Depending on the particular substances contained in the polymer matrix and the particular characteristics of the energy administered, the thread can be transformed from clear to opaque, from thin to thick, from flexible to rigid, from elastic to fragile, etc. to radically modify the properties of the fabric or knitted article obtained therefrom.

The thread can in reality consist of several coaxial layers, with the different modifying substances dispersed in them or interposed between them.

A similar arrangement with one or more layers may be provided for a tube.

Another use for the filmable material of the invention when in the form of a liquid coating is for application to an object or to a thread by spraying or by brush distribution, to totally or partially coat the object with a film.

Subsequent administration of the particular type of energy to activate the particular modifying substance can transform the surface appearance of the object (from rough to smooth or vice versa), or its consistency (from rigid to elastic or vice versa), or its behaviour towards light (from transparent to opaque or vice versa), or its colour, or its behaviour towards determined fluid substances by creating a barrier effect (towards air, gas, vapour, etc.).

The modifying substances can be introduced into the polymer matrix in various ways. They can be directly fed into it, or be contained in microcapsules, in particular microbeads, with their pellicule of different materials, and which on administration of particular different types of energy cause either rupture of the pellicule to expel the contained substance, or commencement of degradation of the material in which they are dispersed.

In addition to substances modifying the characteristics of the filmable material of the invention, polymer matrix crosslinking initiators can also be contained, ie substances reactive to particular forms of energy which can trigger crosslinking only if activated by that type of energy. Again, to prevent possible undesirable activation, crosslinking inhibitors can also be introduced into the polymer matrix to prevent initiator activation if the type of energy administered is different from that programmed.

The crosslinking initiators and/or inhibitors must not react with each other, with the matrix or with the substances contained in the matrix, either before or after their possible transformation. Substances which can be dispersed in the polymer matrix of the filmable material of the invention include:
- electrochromic, thermochromic and photochromic substances, which change colour if subjected to electrical, thermal and UV energy respectively,
- the polyvinyl chloride resins Ebecryl 584 and CN 104880, their crosslinking initiators lrgacure 184 and benzophenone, and their crosslinking inhibitors O₂ and H₂O; these materials increase their rigidity if subjected to UV energy;
- micropearls (SIE), which expand if subjected to heat; in this case the external pressure constitutes an expansion inhibitor,
- liquid crystals, which when subjected to an electric or magnetic field modify their transparency/opacity and conductivity characteristics,
- microcapsules containing oils and perfumes, which when subjected to heat or microwave energy, emit the substances contained in them to give the film odorous or slidability characteristics,
- PET film perforated and wax-filled, which when subjected to heat increases its surface roughness,
- ORMOCER (hybrid polymer), which when subjected to heat and/or UV energy administration crosslinks into a more or less concentrated form creating a barrier and/or rigidity,
- some photopolymerizable unsatured resins, acrylic resins, silicone resins, liquid crystals, polyester resins, organic-inorganic substances and nanocomponents, which when subjected to particular types of energy stiffen the polymer matrix,
- some sublimable substances, such as trioxanes or siloxanes, or isoquinone 5-carbxynitrile or p-dichlorobenzene, which when subjected to thermal energy pass into the gaseous state to increase in volume.

On varying the substances dispersed in the polymer matrix, the nature of the energy to be administered also varies, and which can be for example thermodynamic, electromagnetic (UV, IR, light, X, cosmic radiation) or mechanical (vibration, ultrasound, explosion) or nuclear by particles (ions, protons, plasma, electrons, alpha) or other forms, corresponding in quantity and quality to the particular transformation to be carried out. This energy can also be of natural type, such as sun or humidity or elements of the air such as oxygen, nitrogen, hydrogen and their ions, able separately to trigger, originate, develop and implement the predetermined transformation in a short time.

For a better understanding of the invention, some theoretical examples and some practical embodiments are described hereinafter.

### EXAMPLE 1 (hypothetical)

A single layer film can be formed from three substances A, B, C, mixed into a matrix M compatible with said three substances.

The three substances A, B, C constitute three components, mixed as composites, and can be of identical or different dimensions and forms (fibres, particles, microbeads) and of physical states (phases) which are identical to or different from the matrix and each other (solids, liquids, gases).

Assuming maximum differentiation, A can undergo structural transformation by administration of thermal energy T; B can undergo optical transformation (colour) by administration of electromagnetic energy EM (UV); C can undergo dimensional, volumetric or surface transformation (film thickness) by administration of mechanical acoustic energy AC (ultrasound).

In choosing A, B, C and the energy type T, EM, AC for their differential transformation, correct criteria must be adopted. Specifically, A must be able to increase the film mechanical characteristics on command (for example rigidity increase); B must be able to vary the film colour; C must be able to vary the film dimensions or its density or its surface. A, B, C must pertain to categories (domains) which do not mutually interact and, of the transformations which they undergo, the structural transformation, which concerns the substance A and is obtained by administration of thermal energy must be thermodynamically irreversible; the optical transformation, which concerns the substance B and is obtained by administration of electromagnetic energy EM must be reversible; and the dimensional transformation, which concerns the substance C and is obtained by administration of mechanical-acoustic energy AC, must be irreversible.

### EXAMPLE 2 (hypothetical)

To obtain a multi-layer film the substances A, B, C are mixed separately into three films composed of the same (or different) filmable matrix M containing either the substance A or the substance B or the substance C. All the considerations made in relation to Example 1 (single-layer film) can be repeated, however the procedure is simplified by the fact that as the individual substances are contained in different films, any incompatibility can relate only to the two interfaces between the three layers.

The most convenient succession of transformations comprises firstly administration of thermal energy to obtain thermodynamically irreversible structural transformation of substance A; then administration of acoustic mechanical energy to obtain thermodynamically irreversible dimensional transformation of substance C; and finally administration of electromagnetic energy to obtain thermodynamically reversible optical transformation of substance B.

### EXAMPLE 3 (practical)

A film is described composed of three layers:
- a first layer A of electrochromic material consisting of polypyrrolic polymer able to change colour from transparent to blue on application of an electrical field.
- a second layer B formed from UV resin, photoinitiator and expanding microbeads, and able to react following heat administration to expand the microbeads, or following administration of light of predefined wavelength to crosslink the UV resin and hence stiffen the film,
- a third layer C formed from a coating containing microcapsules which externally enclose perfume and can be ruptured by pressure, ie by administration of particular mechanical energy.

This multi-layer film is able to implement four functions selectively activatable by administration of different types of energy.

In particular, if heat is administered to the film it swells; if irradiated with UV light it stiffens in the irradiated parts; if subjected to pressure it exhales perfume; if subjected to an electric field it undergoes blue coloration.

If more than one transformation is required, given their particular nature they cannot take place in any order, but must have a certain sequence preventing preclusion of a given transformation by a transformation which has been precedingly effected.

In particular, film swelling must preclude its stiffening, which itself must precede coloration; consequently the possible transformation sequences must start with swelling, then coloration, then final exhalation of perfume, or alternatively with perfume exhalation and final coloration.

### EXAMPLE 4 (practical)

A film is described composed of three layers:
- a first layer A of PE containing in its interior (bulk) a crosslinking initiator (for example Irgacure 184), which can be activated with UV light to stiffen the PE,
- a second layer B formed of adhesive and microbeads which can be expanded by administration of heat,
- a third layer C of aluminium.

This multi-layer film is able to implement independently or jointly two functions, specifically with UV irradiation it stiffens in the irradiated part, and with heat administration the microbeads swell and the PE film becomes separable (peelable) from the aluminium film.

### EXAMPLE 5 (practical)

A film is described composed of three layers:
- a first layer A of PE containing in its interior a crosslinking initiator, which can be activated with UV light to stiffen the PE,
- a second layer B of paper impregnated with unsaturated resin and photoinitiator activatable with an electron beam to stiffen the paper.

The film obtained in this manner is given a controlled-extent application of a coating liquid in which microcapsules are dispersed containing polybutylene in their interior to make a peelable bond. The microcapsule pellicule is formed of a material which ruptures by the effect of temperature.

The film obtained can be stiffened by UV light administration, is bondable and by heat administration can be made peelable in the regions to which the coating has been applied.

### EXAMPLE 6 (practical)

A film is described composed of three layers:
- a first layer A of thermochromic material, ie a material which changes colour with temperature,
- a second layer B of paper treated with melamine and able to stiffen with temperature,
- a third layer C of a material able to form a barrier against H₂O and O₂ if subjected to UV administration.

This multi-layer film can stiffen and change colour following heat administration, and can advantageously be used for forming packages for use in microwave ovens.

### EXAMPLE 7 (practical)

A coating is described formed from a polymer matrix in which different types of microcapsules are dispersed:
- the microcapsules of the first type have a pellicule which melts under UV light, and contain internally a photochromic material,
- the microcapsules of the second type have a pellicule which also melts under UV light but of different characteristics, and contain internally a photochromic material of colour different from the first,
- the microcapsules of the third type consist of microbeads which swell with temperature.

When the coating is applied to a surface, it forms a film which, depending on the characteristics of the administered energy (UV light of one or other type, or thermal energy), can assume one or other coloration, or can expand.

If more than one type of energy is administered, the coating undergoes more than one transformation to assume an intermediate coloration between the two and/or a coloration plus simultaneous expansion.

If a definitive colour change is desired, a stabilizing substance must be introduced compatible with the modifications made. If the colour modifying substance is a thermochromic substance, the stabilizing effect can be obtained by UV irradiation.

### EXAMPLE 8 (practical)

A film is described composed of three layers:
- a first layer A consisting of a normal plastic support film of the PE, PP, PET or nylon family, or paper of cellulose or other fibres, covered with an impermeable layer having the characteristics of being structurally impermeable at the surface but with the fluid-dynamic capacity of penetration by capillarity or by diffusion into the micropores or molecular interspaces of the support film.
   The impermeable covering of the layer A is chosen from the silicone family (ormocer) with fluid-dynamic characteristics suitable for its deposition on a surface of the film under formation by any process, for example flat head extrusion or blow moulding.
   The application is made during the formation of, for example, a PE film by flat head extrusion or blow moulding. In the case of extrusion with a flat head system, the impermeable covering can be effected on one of the two faces of the film under formation, in a region in which the temperature and drawing rate are conveniently chosen in accordance with the rheological properties of the impermeable fluid. Likewise, if the film is formed by blow moulding, the covering can be effected within the bubble, in a temperature and drawing region convenient for deposition of the impermeable covering before its complete formation; for its application a nozzle must be designed of geometry and dimensions convenient for the interior of the bubble under formation and such as to allow formation of microdroplets and atomization of the fluid with impermeability characteristics, such as to facilitate deposition with a thickness, structure and characteristics resistant to time.
   With the film obtained by flat head extrusion, the atomization nozzles must also be located in a temperature and drawing region convenient for deposition. However in this case the covering can be effected with other methods, starting from a roller dipping in the impermeable fluid, and over which a surface of the film under formation conveniently passes.
   The impermeable film itself can contain nanocomponents in solution or suspension, with the solvents evaporating during or after deposition, as bicomponent material. In this case a part of the bicomponent can be conceived as complementary, acting on command either in the stage following initial deposition or in any other conveniently chosen stage of the subsequent processing of the film;
- a second layer. B, consisting in practice of a adhesive of any type compatible with that film face not covered with the impermeable film. The adhesive material can be a normally used resin or a resin which crosslinks by energy triggering after its deposition in one or more conveniently chosen stages (see WO 98/47766) and/or also containing reinforcement materials in the form of continuous of discontinuous microfibres of a certain length/diameter ratio or microparticles or microbeads, including those which expand thermally by thermal or mechanical (ultrasound) triggering.
   The face of the film A can be covered with the adhesive material by spreading or by pressing or by calendering between two support films. The ideal process is that of a material filmable either by extrusion-drawing or by deposition through a slit, onto one of the two layer A or B so that it becomes coextruded in a region concentric to the extrusion region of the bubble process under fluid-dynamic conditions and in a location such as to be compatible with union with the layer A during its formation.
   Alternative deposition methods can be equivalent to those described for impermeable covering of the layer A by spraying, by rolling, by pressing or by spinning,
- a third layer C consisting of a support film, on the outer surface of which substances are deposited having optical or electromagnetic or acoustic or thermal insulation or electromagnetic, nuclear or cosmic radiation shielding characteristics, these substances being of any type chosen on the basis of the design and the type of application.

The choice of the substance and support forming the layer C must take account of two realities: the layer C must be compatible with the layers A and B, of which the layer A offers impermeability and the layer B increase in stiffness when triggered; in addition the substances forming the layer C must have deposition characteristics compatible with the primary or secondary manufacturing process for the film already formed by the layers A and B.

If the layer C contains a substance presenting optical characteristics, in particular chromism, colour variations can be obtained by UV excitation (photochromism) or by administration of heat (thermochromism), whereas if the optical characteristics is electroluminescence, it is excited by electrical field administration.

In all cases, in forming the layer C the substance with chromatic characteristics can be incorporated into the support film or applied to it. The layer C can then be applied externally to the already formed layers A and B by spreading or by pressing or by spraying.

If the layer C contains a shielding substance active for example against electromagnetic radiation, this layer can be formed by sol-gel deposition possibly in several layers, of which the most known is that consisting of the three layers semiconductor-silver-semiconductor. The sol-gel deposition process can also be carried out during manufacture of the support film by independent flat head extrusion or blow moulding, with deposition by spraying or by contact or by spinning and subsequent thermal treatment. Of the radiation shielding films, the most usable and well known are those which reflect infrared and/or absorb UV and/or reflect part of the medium waves which can interfere with control devices or can be harmful to health.

If the layer C contains a substance able to make the layer reflecting or absorbent of sound and/or heat waves, this substance is in particular filmed or deposited onto the surface of the support or applied by one of the already described techniques for the other substances indicated in this example. In this case it is preferable to give the surface of the layer C, or at least that surface which in the multi-layer film faces outwards, a particular roughness obtained for example by calendering.

### EXAMPLE 9 (practical)

A film is described composed of three layers:
- a first layer A consisting of a material which is chemically adhesive or physically adhesive (such as microsuckers), the adhesivity of which can also be manifested on a particular surface by command. The layer A must also possess filtration properties (microporosity achieved on command by microexpanding agents, or intrinsically structural such as paper, or molecular such as certain polymer or vitreous substance), designed mainly to allow selective diffusion of molecules or ions resulting from possible degradation of substances in contact with the layer A; these substances, liquid or gaseous, must evidently use osmotically those pressure which develop simultaneously with surface tension, reduced by the effect of the degradation which enables diffusion by capillarity in pores which are of form and dimensions designed for the purpose. The porous substance can be obtained as covering on a support film; in that case the film must be protected by a weak-peeling film such as to enable it to be removed before use.
   The manufacturing process for this substance is certainly independent of the manufacturing process for the layer A and is on the known art in the adhesion field (pressure sensitive). The filtering substances can also be obtained by open cell formation mechanisms by expandable substances,
- a second layer B, again consisting of a substance adhering both to the first layer A and to the third layer C, but basically containing in its matrix microbeads which on expansion triggered thermally or mechanically originate sufficient pressure to obtain adhesion of the layer A against a surface of cylindrical or spherical shape, these being always problematic if not achieved with a uniformly distributed pressure such as that of the layer B. Microbeads which expand on command (thermal or ultrasound) are already available commercially and can attain pressures as high as a few atmospheres in a very short time, of the order of one minute, depending on their composition, coefficient of expansion and thermal or mechanical activator for the expansion. Their relatively easy versatility and mixability with liquid or solid matrices with determined levels of softness of their plastic membrane during expansion, means that the microbeads can be considered not only as increasing the thickness of the layer B, but also as uniformly distributed pressure or force activators when triggered. The layer B must also enable the substances originating from degradation of their contents to diffuse through the layer A (equivalent porosity).
- a third layer, consisting of a substance which colours with litmus paper in the presence of liquid or gaseous substances originating from possible degradation of the contents in contact with the layer A and passing through the pores of the layer A and of the layer B. Of substance which change colour or brightness or any parameter related to their visible appearance, those chosen must be filmable or easily deposited on the surface of the layer B.

A film formed in accordance with this example enables packages to be obtained which are able to highlight alterations in their contents and/or in the packages themselves. In this case the substances contained in the two layers A and B can be activated on command, whereas the substance contained in the layer C can be activated passively by phenomena controlling possible degradation of the package contents.

### EXAMPLE 10 (practical)

A film is described composed of three layers:
- a first layer A consisting of a support film, of which the roughness and porosity, of predetermined forms and dimensions, are able to absorb even considerable percentages of substance which stiffen on thermal or radioactive command in one or more stages, with adhesive properties against applicational surfaces and against the surface of the film of the second layer B. This first layer A consists of a film obtained by pressing, with chemical attack to leach particular molecular compounds or physical or mechanical treatment, and has a surface roughness or geometrical pattern and a volumetric porosity which can both absorb a predetermined series of substances which have the fluid-physical characteristics of becoming an integral part of the film such as to enable it to be worked in an equivalent manner to a one-piece film. The substances absorbed in the roughness and porosity of the film layer A can present not only fluid-dynamic characteristics but also other characteristics such as adhesion to the walls of the pores and surfaces of the constituent substances of the starting film, and solidification on command by administering thermal or radiant energy causing polymerization and/or crosslinking to also increase stiffness.
   These two additional characteristics enable a composite structure to be formed in the film, especially if the starting film consists of fibres or fabric and as such able to undergo consistent stiffness increase of the entire layer A, possibly on command;
- a second layer B, consisting of a normal one-piece support film, with a surface treated with adhesive enabling it to be bonded to one of the two surfaces of the layer A by rolling. The layer B can however also consist of a film having predetermined roughness and porosity, but only for a part of its thickness in that the remaining part must always enable it to adhere to the layer A.
   In all cases the surface of the layer B and its roughness-porosity morphology are then covered or treated such that a surface of the layer B or a part of its thickness accepts or absorbs the material of the third layer C.
- a third layer C, consisting a material which can be deposited as a covering on one of the two surfaces of the layer B by a known process, for example spraying or spreading or impregnation or successive absorption by the pores or roughness of the layer C. The basic characteristic of the substance contained in the layer C is that of being water-repellent and/or self-cleaning, to avoid any type of wetting caused by water or by moisture of the environment or in the form of droplets of any shape or size or as a layer of mist, so also preventing ice formation at temperatures less than 0°C. In addition to known water-repellent materials, coverings of silica (SiO₂) or titanium oxide (TiO₂) can be used, which when in chemical-physical coordination implement the function of preventing water droplet formation by generating on the surfaces a molecular water layer which also prevents dust deposition by electrostatic charges (static electricity), or other contaminating particles, which in this manner can be easily removed by applied cleaning, or self-cleaning without the need for detergents. The particular feature of formation of the aqueous molecular film on the SiO₂-TiO₂ surface is that it originates by photocatalysis of the TiO₂ caused by UV or simply by sunlight. The surface when suitably formed becomes hydrophilic (molecular layer of H₂O) reversibly. In this respect, when UV light ceases its catalytic action, the surface turns water-repellent.
   These commanded or passive actions of the UV light result in film which is water-repellent and self-cleaning by UV command.

### EXAMPLE 11 (practical)

A three-layer film is described having the main characteristic of being electrically conductive with a number of functions in its surfaces, namely: preventing accumulation of electrostatic charges and hence electrostatic attraction of dust and other contaminating particles; preventing transmission of electromagnetic waves which could slow down or accelerate the process of deterioration of the film contents; enabling commanded heating of the contents by the joule effect by administration of electrical energy to the conductive film, provided with two current electrodes acting in specially selected regions of its surface.

The film here described consists of three layers:
- two outer layers A and C, consisting of two support films covered on their outer surfaces by sputtering as single-layer or multi-layer metal with the basic property of high electrical conductivity, and suitably chosen from those which also offer excellent resistance to atmospheric deterioration, abrasion and scratching. The surface of the outer layer A may have only antistatic properties whereas the outer surface of the layer C must also have high electrical conductivity, for which highly conductive materials such as silver and/or gold normally have semiconductor materials added to them, by successive stratification, over the entire deposited surface, with the exception of certain apertures where current carrying electrodes for heat generation will be positioned, and
- a layer B consisting of a conductive material particularly suitable for shielding electromagnetic waves parametrized by their wavelength and electrical and/or magnetic field intensity.

This layer B can be obtained by a conductive covering of the inner surface of one or both the support layers A and C. If the covering concerns both layers, an amplification of the shielding effect against electromagnetic waves is obtained, both those at low frequency and high electromagnetic field (such as generally electromagnetic waves originating from high transmission power electrical fields), and those of other type (high frequency and low electromagnetic field, such as those of telecommunications).

## Claims

1. A filmable material with selectively modifable characteristics, **characterised by** comprising at least one matrix with which there are associated a plurality of different substances which can be selectively activated by administering energies of different types and/or levels, to selectively modify the chemical-physical-structural and mechanical-optical characteristics of the material and/or of the product obtained from it.

2. A material as claimed in claim 1, **characterised in that** the matrix consists of a single layer, within which said different modifying substances are dispersed.

3. A material as claimed in claim 1, **characterised in that** the matrix consists of a plurality of coupled layers, in each of which there is dispersed at least one modifying substance different from those dispersed in the other layers.

4. A material as claimed in claim 1, **characterised in that** the matrix consists of a single layer, to which said different modifying substances are applied.

5. A material as claimed in claim 1, **characterised in that** the different modifying substances are applied to and/or dispersed in at least one layer.

6. A material as claimed in claim 4, **characterised in that** the different modifying substances are applied to a controlled extent to the layer forming the matrix..

7. A material as claimed in claim 1, **characterised in that** the matrix consists of a plurality of coupled layers, said different modifying substances being applied between adjacent layers.

8. A material as claimed in claim 1, **characterised in that** the matrix consists of an extruded film, to which said different modifying substances are applied during its formation.

9. A material as claimed in claim 1, **characterised in that** the matrix consists of a thread, within which said different modifying substances are dispersed.

10. A material as claimed in claim 1, **characterised in that** the matrix consists of a thread formed from a plurality of coaxial layers, in each of which there is dispersed at least one modifying substance different from those dispersed in the other layers.

11. A material as claimed in claim 1, **characterised in that** the matrix consists of a thread, to which said different modifying substances are applied.

12. A material as claimed in claim 1 **characterised in that** the matrix consists of a tube, in the thick of which modifying substances are dispersed.

13. A material as claimed in claim 1 **characterised in that** the matrix consists of a tube formed from a plurality of coaxial layers, in each of which there is dispersed at least one modifying substance different from those dispersed in the other layers.

14. A material as claimed in claim 1 **characterised in that** the matrix consists of a tube to which said different modifying substances are applied.

15. A material as claimed in claim 1, **characterised in that** the matrix consists of a plurality of coaxial layers, the different modifying substances being applied between adjacent coaxial layers.

16. A material as claimed in claim 1, **characterised in that** said matrix consists of a polymer resin.

17. A material as claimed in claim 16, **characterised in that** said matrix consists of a polyester resin, polyethylene, polypropylene, polybutene or polyvinylchloride.

18. A material as claimed in claim 1, **characterised in that** said modifying substances are retained by fibres associated with said matrix.

19. A material as claimed in claim 1, **characterised in that** said modifying substances are in the form of nanoparticles.

20. A material as claimed in claim 1, **characterised in .that** said modifying substances are enclosed in microcapsules associated with said matrix.

21. A material as claimed in claim 4, **characterised in that** said modifying substances are coextruded with said matrix.

22. A material as claimed in claim 1, **characterised by** comprising crosslinking initiators and/or inhibitors for said modifying substances and/or said matrix active to different energy types and/or levels.

23. A material as claimed in claim 1, **characterised in that** said modifying substances are reactive to different energy types and/or levels pertaining to the group comprising thermal energy, mechanical energy, radiation energy at different wavelengths, visible radiation energy, infrared radiation energy, electrical energy, ion energy, electrochemical energy, electromagnetic energy, nuclear energy.

24. A material as claimed in claim 1, **characterised in that** said modifying substances pertain to the group comprising electrochromic substances, thermochromic substances, photochromic substances, expanding microbeads, liquid crystals, microcapsules containing oils and/or perfumes, heat-sensitive waxes, nanoparticles, stiffening resins such as unsaturated photopolymerizable resins, acrylic resins, hybrid organic-inorganic resins, liquid crystals and polyester resins, and expanding resins such as sublimable substances and in particular trioxanes, siloxanes, isoquinone 5-carboxynitrile and p-dichlorobenzene.

## Patentansprüche

1. Folienmaterial mit selektiv modifizierbaren Eigenschaften, **dadurch gekennzeichnet, dass** es wenigstens eine Matrix umfasst, mit der eine Vielzahl unterschiedlicher Substanzen assoziiert sind, die selektiv durch Einwirkung von Energie unterschiedlicher Art und/oder Niveau aktiviert werden können, um die chemisch-physikalischstrukturellen und mechanisch-optischen Eigenschaften des daraus gebildeten Materials und/oder Produkts zu modifizieren.

2. Material nach Anspruch 1, **dadurch gekennzeichnet, dass** die Matrix aus einer einzigen Schicht besteht, in der die unterschiedlichen modifizierenden Substanzen dispergiert sind.

3. Material nach Anspruch 1, **dadurch gekennzeichnet, dass** die Matrix aus einer Vielzahl von verbundenen Schichten besteht, in denen jeweils wenigstens eine modifizierende Substanz dispergiert ist, die sich von jenen, die in den anderen Schichten dispergiert sind, unterscheidet.

4. Material nach Anspruch 1, **dadurch gekennzeichnet, dass** die Matrix aus einer einzigen Schicht besteht, auf die die besagten unterschiedlichen modifizierenden Substanzen aufgetragen sind.

5. Material nach Anspruch 1, **dadurch gekennzeichnet, dass** die unterschiedlichen modifizierenden Substanzen auf wenigstens eine Schicht aufgetragen und/oder darin dispergiert sind.

6. Material nach Anspruch 4, **dadurch gekennzeichnet, dass** die unterschiedlichen modifizierenden Substanzen in einem kontrollierten Ausmaß auf die Schicht aufgetragen sind, die die Matrix bildet.

7. Material nach Anspruch 1, **dadurch gekennzeichnet, dass** die Matrix aus einer Vielzahl von verbundenen Schichten besteht, wobei die unterschiedlichen modifizierenden Substanzen zwischen benachbarten Schichten vorgesehen sind.

8. Material nach Anspruch 1, **dadurch gekennzeichnet, dass** die Matrix aus einer extrudierten Folie besteht, auf die die unterschiedlichen modifizierenden Substanzen während deren Bildung aufgetragen sind.

9. Material nach Anspruch 1, **dadurch gekennzeichnet, dass** die Matrix aus einem Faden besteht, in dem die besagten unterschiedlichen modifizierenden Substanzen dispergiert.sind.

10. Material nach Anspruch 1, **dadurch gekennzeichnet, dass** die Matrix aus einem Faden besteht, der aus einer Vielzahl koaxialer Schichten gebildet ist, wobei in jeder wenigstens eine modifizierende Substanz dispergiert ist, die sich von jenen, die in den anderen Schichten dispergiert sind, unterscheidet.

11. Material nach Anspruch 1, **dadurch gekennzeichnet, dass** die Matrix aus einem Faden besteht, auf den die besagten unterschiedlichen modifizierenden Substanzen aufgetragen sind.

12. Material nach Anspruch 1, **dadurch gekennzeichnet, dass** die Matrix aus einem Rohr besteht, in dessen Masse modifizierbare Substanzen dispergiert sind.

13. Material nach Anspruch 1, **dadurch gekennzeichnet, dass** die Matrix aus einem Rohr besteht, das aus einer Vielzahl von koaxialen Schichten gebildet ist, in denen jeweils wenigstens eine modifizierende Substanz dispergiert ist, die sich von jenen, die in den anderen Schichten dispergiert sind, unterscheidet.

14. Material nach Anspruch 1, **dadurch gekennzeichnet, dass** die Matrix aus einem Rohr besteht, auf das die besagten unterschiedlichen modifizierenden Substanzen aufgetragen sind.

15. Material nach Anspruch 1, **dadurch gekennzeichnet, dass** die Matrix aus einer Vielzahl koaxialer Schichten besteht, wobei die unterschiedlichen modifizierenden Substanzen zwischen benachbarten koaxialen Schichten vorgesehen sind.

16. Material nach Anspruch 1, **dadurch gekennzeichnet, dass** die besagte Matrix aus einem Polymerharz besteht.

17. Material nach Anspruch 16, **dadurch gekennzeichnet, dass** die besagte Matrix aus Polyethylen, Polypropylen, Polybuten oder Polyvinylchlorid besteht.

18. Material nach Anspruch 1, **dadurch gekennzeichnet, dass** die besagten modifizierenden Substanzen durch Fasern gehalten werden, die mit der besagten Matrix assoziiert sind.

19. Material nach Anspruch 1, **dadurch gekennzeichnet, dass** die besagten modifizierenden Substanzen in Form von Nanopartikeln vorliegen.

20. Material nach Anspruch 1, **dadurch gekennzeichnet, dass** die besagten modifizierenden Substanzen in Mikrokapseln eingeschlossen sind, die mit der besagten Matrix assoziiert sind.

21. Material nach Anspruch 4, **dadurch gekennzeichnet, dass** die besagten modifizierenden Substanzen mit der besagten Matrix koextrudiert sind.

22. Material nach Anspruch 1, **dadurch gekennzeichnet, dass** es Vernetzungsinitiatoren und/oder Inhibitoren für die besagten modifizierenden Substanzen und/oder die besagte Matrix umfasst, die gegenüber unterschiedlichen Energiearten und/oder Niveaus aktiv sind.

23. Material nach Anspruch 1, **dadurch gekennzeichnet, dass** die besagten modifizierenden Substanzen gegenüber unterschiedlichen Energiearten und/oder Niveaus reaktiv sind, welche zu der Gruppe gehören, die thermische Energie, mechanische Energie, Strahlungsenergie mit unterschiedlichen Wellenlängen, sichtbare Strahlungsenergie, Infrarotstrahlungsenergie, elektrische Energie, Ionenenergie, elektrochemische Energie, elektromagnetische Energie und Kernenergie umfasst.

24. Material nach Anspruch 1, **dadurch gekennzeichnet, dass** die besagten modifizierenden Substanzen zu der Gruppe gehören, welche elektrochrome Substanzen, thermochrome Substanzen, photochrome Substanzen, expandierende Mikrokügelchen, Flüssigkristalle, Öle- und/oder parfümhaltige Mikrokapseln, wärmeempfindliche Wachse, Nanopartikel, Versteifungsharze wie ungesättigte photopolymerisierbare Harze, Acrylharze, organischanorganische Hybridharze, Flüssigkristalle und Polyester sowie expandierende Harze wie sublimierbare Substanzen und insbesondere Trioxane, Siloxane, Isochinon-5-carboxynitril und p-Dichlorbenzol umfasst.

## Revendications

1. Matériau pouvant être formé en film ayant des caractéristiques sélectivement modifiables, **caractérisé en ce qu'**il comprend au moins une matrice à laquelle sont associées une pluralité de substances différentes qui peuvent être sélectivement activées en administrant des énergies de types et/ou de niveaux différents, pour modifier sélectivement les caractéristiques chimico-physico-structurelles et opto-mécaniques du matériau et/ou du produit obtenu à partir de celui-ci.

2. Matériau selon la revendication 1, **caractérisé en ce que** la matrice consiste en une couche unique, à l'intérieur de laquelle sont dispersées lesdites différentes substances modifiantes.

3. Matériau selon la revendication 1, **caractérisé en ce que** la matrice consiste en une pluralité de couches couplées, dans chacune desquelles est dispersée au moins une substance modifiante différente de celles dispersées dans les autres couches.

4. Matériau selon la revendication 1, **caractérisé en ce que** la matrice consiste en une couche unique, sur laquelle sont appliquées lesdites différentes substances modifiantes.

5. Matériau selon la revendication 1, **caractérisé en ce que** les différentes substances modifiantes sont appliquées et/ou dispersées dans au moins une couche.

6. Matériau selon la revendication 4, **caractérisé en ce que** les différentes substances modifiantes sont appliquées dans une mesure contrôlée sur la couche formant la matrice.

7. Matériau selon la revendication 1, **caractérisé en ce que** la matrice consiste en une pluralité de couches couplées, lesdites différentes substances modifiantes étant appliquées entre les couches adjacentes.

8. Matériau selon la revendication 1, **caractérisé en ce que** la matrice consiste en un film extrudé, sur lequel sont appliquées lesdites différentes substances modifiantes pendant sa formation.

9. Matériau selon la revendication 1, **caractérisé en ce que** la matrice consiste en un fil, à l'intérieur duquel sont dispersées lesdites différentes substances modifiantes.

10. Matériau selon la revendication 1, **caractérisé en ce que** la matrice consiste en un fil formé à partir d'une pluralité de couches coaxiales, dans chacune desquelles est dispersée au moins une substance modifiante différente de celles dispersées dans les autres couches.

11. Matériau selon la revendication 1, **caractérisé en ce que** la matrice consiste en un fil, sur lequel sont appliquées lesdites différentes substances modifiantes.

12. Matériau selon la revendication 1, **caractérisé en ce que** la matrice consiste en un tube, dans l'épaisseur duquel sont dispersées des substances modifiantes.

13. Matériau selon la revendication 1, **caractérisé en ce que** la matrice consiste en un tube formé à partir d'une pluralité de couches coaxiales, dans chacune desquelles est dispersée au moins une substance modifiante différente de celles dispersées dans les autres couches.

14. Matériau selon la revendication 1, **caractérisé en ce que** la matrice consiste en un tube sur lequel sont appliquées lesdites différentes substances modifiantes.

15. Matériau selon la revendication 1, **caractérisé en ce que** la matrice consiste en une pluralité de couches coaxiales, les différentes substances modifiantes étant appliquées entre les couches coaxiales adjacentes.

16. Matériau selon la revendication 1, **caractérisé en ce que** ladite matrice consiste en une résine polymère.

17. Matériau selon la revendication 16, **caractérisé en ce que** ladite matrice consiste en une résine polyester, du polyéthylène, du polypropylène, du polybutène ou du polychlorure de vinyle.

18. Matériau selon la revendication 1, **caractérisé en ce que** lesdites substances modifiantes sont retenues par des fibres associées à ladite matrice.

19. Matériau selon la revendication 1, **caractérisé en ce que** lesdites substances modifiantes sont sous la forme de nanoparticules.

20. Matériau selon la revendication 1, **caractérisé en ce que** lesdites substances modifiantes sont enfermées dans des microcapsules associées à ladite matrice.

21. Matériau selon la revendication 4, **caractérisé en ce que** lesdites substances modifiantes sont coextrudées avec ladite matrice.

22. Matériau selon la revendication 1, **caractérisé en ce qu'**il comprend des initiateurs et/ou inhibiteurs de réticulation pour lesdites substances modifiantes et/ou ladite matrice active à différents types et/ou niveaux d'énergie.

23. Matériau selon la revendication 1, **caractérisé en ce que** lesdites substances modifiantes sont réactives à différents types et/ou niveaux d'énergie faisant partie du groupe comprenant l'énergie thermique, l'énergie mécanique, l'énergie de rayonnement à différentes longueurs d'onde, l'énergie de rayonnement visible, l'énergie de rayonnement infrarouge, l'énergie électrique, l'énergie ionique, l'énergie électrochimique, l'énergie électromagnétique, l'énergie nucléaire.

24. Matériau selon la revendication 1, **caractérisé en ce que** lesdites substances modifiantes font partie du groupe comprenant les substances électrochromiques, les substances thermochromiques, les substances photochromiques, les microperles expansives, les cristaux liquides, les microcapsules contenant des huiles et/ou des parfums, les cires thermosensibles, les nanoparticules, les résines de renforcement telles que les résines photopolymérisables insaturées, les résines acryliques, les résines organiques-inorganiques hybrides, les cristaux liquides et les résines polyesters, et les résines expansives telles que les substances sublimables et en particulier les trioxanes, les siloxanes, l'isoquinone 5-carboxynitrile et le p-dichlorobenzène.
